# EUROPEAN PATENT SPECIFICATION

(11) **EP 0 812 950 B1**
(45) Date of publication and mention of the grant of the patent: **22.05.2002**
(21) Application number: 97660062.7
(22) Date of filing: 09.06.1997
(51) Int. Cl.: D21B 1/32

(54) **Method and apparatus for defibering and screening recycled fibre material**
Verfahren und Vorrichtung zum Zerfasern und Sieben eines recyclierten Fasermaterials
Procédé et dispositif pour défibrage et l'épuration d'un matériau recyclé

(30) Priority: 12.06.1996 FI 962446
(43) Date of publication of application: 17.12.1997
(73) Proprietor: Metso Paper, Inc., 00130 Helsinki (FI)
(72) Inventor: Hautala, Jouko, 33400 Tampere (FI)
(74) Representative: Kaukonen, Juha Veikko

(56) References cited:
- EP-A- 0 402 238
- WO-A-94/09202
- AT-B- 388 576

## Description

The invention relates to a method for defibering and screening recycled fibre material according to the preamble of claim 1.

The invention further relates to an apparatus for defibering and screening recycled fibre material according to the preamble of claim 10.

Recycled fibre material, i.e. waste paper or some other similar fibre material that has already been used, is defibered, purified and screened at present mainly by supplying the material in batches into a pulper where it is defibered simultaneously with the removal of impurities. Such arrangements are known e.g. from DE 2,757,580 and CH 617,734. Each reference discloses an arrangement where a fibre mass is supplied to a vertical pulper for disintegration, whereafter the mass is pumped from the pulper to the following stages of processing, such as the removal of refuse and separate post-processing that is carried out with a horizontal pulper. However, recycled material comprises a considerable amount of impurities that have different characteristics and behaviour and that must therefore be removed in different manners. Such impurities include, for example, heavy impurities, pieces of metal, stones of different shapes and sizes, and sand, and light impurities, such as plastic-based packaging materials and various glue-based substances. All of these cannot be removed with the same technique nor can they be separated at the same time as fibre bundles and more solid pieces of fibre.

As recycling becomes more common and the requirements set for the use of material obtained from recycling increase, demands for defibering and purification also become more numerous and the processes and apparatuses become more and more expensive. Known vertical pulpers that operate on an intermittent basis require the use of large containers to provide the required capacity, since about half of the operating time is taken by the stages of emptying and filling. This also affects the process control and requires large apparatuses. Further, moving a fibre mass from one stage to another requires in all cases pumps that are capable of pumping the fibre mass and that consume a considerable amount of energy and require maintenance and repair. Conventionally, also vertical pulpers that operate on a batch basis are low consistency pulpers. The prior continuous high consistency pulpers in turn are exclusively drum pulpers that are large and expensive, since the degree to which they are filled during operation is only about 20 to 30% of their total volume. Further, drum pulpers are not capable of disintegrating such waste paper types that are difficult to process.

WO-A-94/09202 discloses a method according to the preamble of claim 1 and an apparatus according to the preamble of claim 10.

The purpose of the present invention is to provide a method and an apparatus with which it is as easy and effective as possible to defiber and screen a recycled fibre mass and to separate impurities on a continuous basis. The method according to the invention is characterized by the features defined in the characterizing portion of claim 1.

The apparatus according to the invention is characterized by the features defined in the characterizing portion of claim 10.

The basic idea of the invention is that recycled fibre material is processed in two successive vertical pulpers as a continuous process such that a thick fibre mass suspension that consists of water and the mass disintegrated in a primary or high consistency pulper is moved from the lower part of the primary pulper to a secondary or low consistency pulper, the suspension being simultaneously diluted with water, via only a transfer pipe provided between the pulpers without the aid of pumps by utilizing the principle of so-called communicating vessels. This means that the flow of the resulting fibre material is based entirely on the pressure difference that results from the difference in the fluid levels and that is produced by the recycled fibre mass and water supplied to the high consistency pulper. Further, another idea of the invention is that the fibre mass is screened immediately after the low consistency pulper preferably by using a low consistency pulper with an associated screen, whereupon the fraction rejected in the screening is returned to the high consistency pulper, which simultaneously also receives circulated water and chemicals that are mixed with the water and that were required for removing ink etc.

The invention has the advantage that when a vertical pulper that operates as a high consistency pulper is used as the first pulper, for example the removal of ink can be achieved with a lower consumption of chemicals and steam than in conventional pulping. The invention also has the advantage that the forward flow of the fibre mass in the process can be controlled simply by adjusting the addition of water and the material to be defibered, whereupon the defibering can be carried out with effective vertical pulpers as a continuous process merely by removing fibre mass suspension from the low consistency pulper. Yet another advantage of the invention is that the consumption of energy is considerably lower than in known arrangements and when the reject and water that remain in the final stage of the defibering/screening process are returned to the high consistency pulper, the consumption of new water can also be decreased significantly compared to prior arrangements.

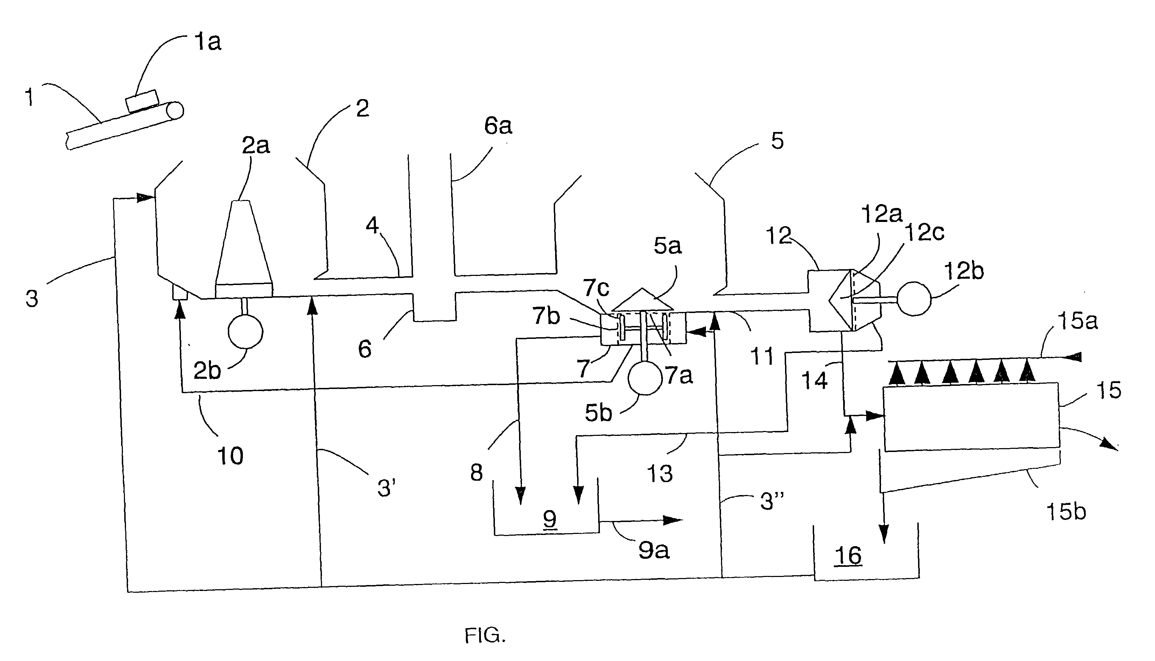

The invention will be described in greater detail in the accompanying drawing, which schematically shows an apparatus according to the invention.

The apparatus comprises a conveyor 1 for supplying material to be defibered 1a for processing. The apparatus further comprises a primary or high consistency pulper 2 to which the material to be defibered is supplied usually in the form of bales. Water is also supplied to the high consistency pulper 2 via a conduit 3. The rotor 2a of the high consistency pulper 2 is shaped and designed such that when the dry solids content is about 10 to 18%, the rotor disintegrates the recycled fibre material effectively. The rotor 2a is rotated in a manner known per se by means of a motor 2b shown schematically. The high consistency pulper 2 is connected from its lower end to a secondary or low consistency pulper 5 via a transfer conduit 4. Both the high consistency pulper 2 and the low consistency pulper 5 are vertical pulpers. The transfer conduit 4 does not comprise any pumps or the like, but the flow of the fibre mass from the high consistency pulper 2 to the low consistency pulper 5 is based on the principle of communicating vessels, whereupon the flow is adjusted solely by the pressure produced by the difference in the fluid levels of the pulpers, resulting from the material to be defibered and the water supplied to the pulper, and the fibre mass suspension removed from the low consistency pulper and the reject, respectively. If no new material or water is supplied, the fluid levels of the pulpers become even.

The transfer conduit 4 comprises a separate refuse chute 6 to which the heavier material conveyed with the fibre mass suspension falls and from which it can be removed for example at suitable intervals or continuously, if desired. For this purpose, the chute can be provided, for example, with a discharge mechanism formed by different valves in a manner known per se, or the material can be removed for example by lifting it with a separate lifting device. The removal of the material from the refuse chute is known per se and therefore contains nothing unconventional. Correspondingly, above the refuse chute 6 there is a pipe 6a that has an open upper end and that extends a short distance above the fluid level of the low consistency pulper 5. For example material that is lighter than the fibre mass travels to this pipe and can be removed therefrom at suitable intervals, for example.

In the low consistency pulper 5, the fibre mass suspension is further disintegrated at a low consistency, i.e. typically about 2 to 8%. This pulper is as described in Fl 82,493, for example, whereupon it is provided with a double screen 7 placed in the lower part thereof. Between the screen 7 and the low consistency pulper 5 there is a horizontal screen plate 7a that performs the coarse screening so that litter and large impurities cannot pass through it. Correspondingly, fibre mass suspension that has passed through the screen plate 7a must pass through another cylindrical screen surface 7b. The rotor 5a of the pulper 5 and blades 7c of the double screen 7 that sweep the screen surface are rotated by means of the same shaft by the motor 5b that is shown schematically. The fibre mass suspension that has passed through the screen surface 7b is removed from the screen 7 via a discharge conduit 8 for example to a mass container 9 and from there via a conduit 9a to the next processing stage. The part of the fibre mass suspension that does not pass through the second screen surface 7b is returned via a conduit 10 to the lower part of the high consistency pulper 2 to be defibered again in the pulper. Both water and chemicals are simultaneously returned to the pulper, so that there is less need to add water via the conduit 3. The material that does not pass through the screen plate 7a, i.e. the reject, is removed via a reject conduit 11 starting from the lower part of the low consistency pulper 5 to a separate reject pulper 12 that is typically a horizontal pulper. The rotor 12c of this horizontal pulper is correspondingly rotated by means of a motor 12b shown schematically. The removed reject disintegrates in the reject pulper 12 partly into a fibre material that passes through a screen plate 12a provided in the reject pulper 12 and is conducted through a conduit 13 to the mass container 9. Correspondingly, the part of the reject that does not pass through the screen plate 12a is conducted via a conduit 14 to a reject drum 15 where the reject is washed with water supplied from a spray pipe 15a such that the fibres that have been supplied with the reject are removed with the water into a collection vessel 15b. The obtained water that contains only a little fibre is gathered for example to a collection basin 16 from where it is supplied along the conduit 3 to the high consistency pulper 2. The same fibre-containing water can be supplied, if required, along conduits 3' and 3" to the transfer conduit 4, the screen 7, the reject conduit 11 and the conduit 14 to dilute the masses flowing therein. It is thus possible to circulate as large an amount of the water as possible inside the process and actual additional water is only needed in an amount that corresponds to the water discharged from the process with the removed mass.

The invention is described above in the specification and in the drawing by way of example only, and it is not restricted thereto in any way. The reject pulper 12 may be any suitable pulper with which reject can be processed. The washing drum may also be any drum type suitable for the purpose. The essential factor is that the primary pulper and the secondary pulper are vertical pulpers and that between the pulpers there is a transfer conduit without pumps or the like, so that the transfer of the fibre mass from the primary pulper to the secondary pulper takes place solely by the action of the pressure difference produced by the mass and water supplied to the primary pulper.

## Claims

1. A method for defibering and screening recycled fibre material, wherein the recycled fibre material is defibered with water, impurities are removed therefrom and the obtained fibre mass is screened, whereby the recycled fibre material to be defibered is supplied with water to a primary pulper which is a high consistency pulper where it is first defibered at a high consistency, the fibre mass suspension formed in the high consistency pulper is supplied from it without screening via a transfer conduit which leads from the lower part of the high consistency pulper to a secondary pulper, where the recycled fibre material is further defibered and the fibre mass suspension is only screened after being defibered in the secondary pulper, **characterized in that** both the primary and the secondary pulper are vertical pulpers, that the secondary pulper is a low consistency pulper (5), into which the fibre mass suspension formed in the high consistency pulper (2) diluted with water is supplied based on the principle of communicating vessels solely by the action of the pressure resulting from the difference in the fluid levels of the high consistency pulper (2) and the low consistency pulper (5).

2. A method according to claim 1, **characterized in that** the fibre mass that flows from the high consistency pulper (2) to the low consistency pulper (5) is diluted by supplying dilution water to the fibre mass suspension to the end of the transfer conduit (4) provided between the pulpers (2, 5) on the side of the high consistency pulper (2).

3. A method according to claim 2, **characterized in that** heavy impurities are separated from the fibre mass flowing from the high consistency pulper (2) to the low consistency pulper (5) by means of a refuse chute (6) placed in the transfer conduit (4).

4. A method according to any one of the preceding claims, **characterized in that** the fibre mass suspension is screened by means of a screen (7) associated with the low consistency pulper (5), whereupon the fibre mass suspension that has passed through a screen plate (7a) provided between the screen (7) and the low consistency pulper (5) is further screened by means of a cylindrical screen surface (7b) placed in the screen (7), so that the fibre mass suspension that has passed through the screen surface (7b) is supplied for further processing and the part of the fibre mass suspension that has not passed through the surface is returned to the high consistency pulper (2), and that the reject that does not pass through the screen plate (7a) is conducted to a separate reject pulper (12) for further processing.

5. A method according to claim 4, **characterized in that** the material that has passed through a screen plate (12a) provided in the reject pulper is supplied for further processing and the reject that has not passed through the plate is supplied for washing in a separate washing drum (15).

6. A method according to claim 5, **characterized in that** the water used in the washing and the fibre material separated from the reject and mixed with the water are recovered and some of it is supplied to the high consistency pulper (2).

7. A method according to claim 6, **characterized in that** some of said recovered water is supplied to the transfer conduit (4) between the pulpers (2, 5) as dilution water for the fibre mass suspension.

8. A method according to claim 6 or 7, **characterized in that** all the additional water replacing the water that is discharged with the fibre mass suspension supplied for further processing is fed into the defibering stage in the form of washing water of the washing drum.

9. A method according to any one of the preceding claims, **characterized in that** the fibre mass is disintegrated in the high consistency pulper such that the consistency is 10 to 18%, and that it is diluted such that the consistency in the low consistency pulper is 2 to 8%.

10. An apparatus for defibering and screening recycled fibre material, the apparatus comprising means for defibering the fibre material and a screen for screening the obtained fibre mass suspension, whereby the means for defibering the recycled fibre material comprise two pulpers, the first of which is a high consistency pulper where the recycled fibre material and water are supplied and the pulpers are interconnected with a transfer conduit that leads from the lower part of the high consistency pulper to the second pulper, **characterized in that** both pulpers (2, 5) are vertical pulpers, that the second pulper (5) is a low consistency pulper where the fibre mass suspension formed in the high consistency pulper is supplied for further defibering, diluted with water, and pulpers (2, 5) are directly interconnected with the transfer conduit (4) based on the principle of communications vessels so, that the fibre mass suspension flows from the high consistency pulper (2) to the low consistency pulper (5) solely by the action of the pressure produced by the difference in the fluid levels of the high consistency pulper (2) and the low consistency pulper (5).

11. An apparatus according to claim 10, **characterized in that** the transfer conduit (4) comprises a refuse chute (6) for removing impurities that are heavier than the fibre mass suspension from the fibre mass suspension when it flows from the high consistency pulper (2) to the low consistency pulper (5).

12. An apparatus according to claim 10 or 11, **characterized in that** the means for screening the fibre mass suspension comprise a screen (7) that is associated with the low consistency pulper (5), so that between the low consistency pulper (5) and the screen (7) there is a screen plate (7a) through which the fibre mass suspension flows to the screen (7) for screening.

13. An apparatus according to claim 12, **characterized in that** the screen (7) comprises a separate cylindrical screen surface (7b), the material that has passed through the surface being conducted for further processing, that the apparatus comprises a conduit (10) for returning the material that has not passed through the screen surface (7b) back to the high consistency pulper (2), and that the apparatus comprises a separate reject pulper (12), and that the reject pulper (12) is connected to the low consistency pulper (5) so that the material that does not pass through the screen plate (7a) flows from the low consistency pulper (5) to the reject pulper (12) to be further processed therein.

14. An apparatus according to claim 13, **characterized in that** the reject pulper (12) comprises a screen plate (12a), the material that has passed through the plate being conducted for further processing, and that the apparatus comprises a washing drum (15) to which the material that has not passed through the screen plate (12a) is conducted for washing.

15. An apparatus according to claim 14, **characterized in that** it comprises means for recovering the water used in the washing drum (15) and the fibre material mixed with the water, and for supplying some of the water and fibre to the high consistency pulper (2).

16. An apparatus according to claim 15, **characterized in that** it comprises a conduit (3') for conducting the water recovered from the washing stage and the fibre material mixed with the water to the transfer conduit situated between the high consistency pulper (2) and the low consistency pulper (5) in order to dilute the fibre mass suspension for the low consistency pulper in the transfer conduit.

## Patentansprüche

1. Verfahren zum Zerfasern und Sieben von Altfasermaterial, wobei das Altfasermaterial mit Wasser zerfasert wird, Unreinheiten aus diesem entfernt werden und die erhaltene Fasermasse gesiebt wird, wodurch das zu zerfasernde Altfasermaterial mit Wasser zu einem Primärstofflöser geliefert wird, der ein Hochdichtepulver ist, bei dem es zunächst bei einer hohen Dichte zerfasert wird, die in dem Hochdichtestofflöser ausgebildete Fasermassensuspension von diesem ohne Sieben über eine Übertragungsleitung geliefert wird, die von dem unteren Abschnitt des Hochdichtestofflösers zu einem Sekundärstofflöser führt, bei dem das Altfasermaterial weiter verfasert wird und die Fasermassensuspension nur gesiebt wird, nachdem sie in dem Sekundärstofflöser zerfasert worden ist,
**dadurch gekennzeichnet, dass**
sowohl der Primärstofflöser als auch der Sekundärstofflöser vertikale Stofflöser sind,
der Sekundärstofflöser ein Niedrigdichtestofflöser (5) ist, in den die in dem Hochdichtestofflöser (2) ausgebildete Fasermassensuspension verdünnt mit Wasser auf der Grundlage des Prinzips von in Verbindung stehenden Gefässen lediglich durch die Wirkung des Druckes geliefert wird, der sich aus dem Unterschied in den Fluidhöhen des Hochdichtestofflösers (2) und des Niedrigdichtestofflösers (5) ergibt.

2. Verfahren gemäß Anspruch 1,
**dadurch gekennzeichnet, dass**
die Fasermasse, die von dem Hochdichtestofflöser (2) zu dem Niedrigdichtestofflöser (5) strömt, durch ein Liefern von Verdünnungswasser zu der Fasermassensuspension an dem Ende der Übertragungsleitung (4) verdünnt wird, die zwischen den Stofflösern (2, 5) an der Seite des Hochdichtestofflösers (2) vorgesehen ist.

3. Verfahren gemäß Anspruch 1,
**dadurch gekennzeichnet, dass**
schwere Verunreinigungen von der von dem Hochdichtestofflöser (2) zu dem Niedrigdichtestofflöser (5) strömenden Fasermasse mittels eines Abfallschachtes (6) abgetrennt werden, der in der Übertragungsleitung (4) angeordnet ist.

4. Verfahren gemäß einem der vorherigen Ansprüche,
**dadurch gekennzeichnet, dass**
die Fasermassensuspension mittels eines Siebes (7) gesiebt wird, das zu dem Niedrigdichtestofflöser (5) zugehörig ist, woraufhin die Fasermassensuspension, die durch eine Siebplatte (7a) getreten ist, die zwischen dem Sieb (7) und dem Niedrigdichtestofflöser (5) vorgesehen ist, weiter mittels einer in dem Sieb (7) angeordneten zylindrischen Siebfläche (7b) gesiebt wird, so dass die Fasermassensuspension, die durch die Siebfläche (7b) getreten ist, für eine weitere Behandlung geliefert wird und der Abschnitt der Fasermassensuspension, der nicht durch die Fläche getreten ist, zu dem Hochdichtestofflöser (2) zurückkehrt, und der Abfall, der nicht durch die Siebplatte (7a) tritt, zu einem separaten Abfallstofflöser (12) für ein weiteres Behandeln geleitet wird.

5. Verfahren gemäß Anspruch 4,
**dadurch gekennzeichnet, dass**
das Material, das durch eine Siebplatte (12a) getreten ist, die in dem Abfallstofflöser vorgesehen ist, für ein weiteres Behandeln geliefert wird, und der Abfall, der nicht durch die Platte getreten ist, geliefert wird, um in einer separaten Waschtrommel (15) gewaschen zu werden.

6. Verfahren gemäß Anspruch 5,
**dadurch gekennzeichnet, dass**
das bei dem Waschen verwendete Wasser und das von dem Abfall getrennte und mit dem Wasser vermischte Fasermaterial wiedergewonnen werden und ein Teil davon zu dem Hochdichtestofflöser (2) geliefert wird.

7. Verfahren gemäß Anspruch 6,
**dadurch gekennzeichnet, dass**
ein Teil des wiedergewonnenen Wassers zu der Übertragungsleitung (4) zwischen den Stofflösern (2, 5) als Verdünnungswasser für die Fasermassensuspension geliefert wird.

8. Verfahren gemäß Anspruch 6 oder 7,
**dadurch gekennzeichnet, dass**
sämtliches zusätzliches Wasser, dass das Wasser ersetzt, das mit der Fasermassensuspension herausgegeben wird, die für die weitere Behandlung geliefert wird, zu der Entfaserungsstufe in der Form von Waschwasser der Waschtrommel geliefert wird.

9. Verfahren gemäß einem der vorherigen Ansprüche,
**dadurch gekennzeichnet, dass**
die Fasermasse in dem Hochdichtestofflöser derart aufgelöst wird, dass die Dichte 10 bis 18% beträgt, und dass sie derart verdünnt wird, dass die Dichte in dem Niedrigdichtestofflöser 2 bis 8% beträgt.

10. Gerät zum Zerfasern und Sieben von Altfasermaterial, wobei das Gerät eine Einrichtung zum Zerfasern des Fasermaterials und ein Sieb zum Sieben der erhaltenen Fasermassensuspension aufweist, wobei die Einrichtung zum Zerfasern des Altfasermaterials zwei Stofflöser aufweist, wobei der erste von ihnen ein Hochdichtestofflöser ist, bei dem das Altfasermaterial und Wasser geliefert werden, und die Stofflöser miteinander mit einer Übertragungsleitung verbunden sind, die von dem unteren Abschnitt des Hochdichtestofflösers zu dem zweiten Stofflöser führt,
**dadurch gekennzeichnet, dass**
beide Stofflöser (2, 5) vertikale Stofflöser sind,
der zweite Stofflöser (5) ein Niedrigdichtestofflöser ist, bei dem die in dem Hochdichtestofflöser ausgebildete Fasermassensuspension für ein weiteres Zerfasern geliefert wird und mit Wasser verdünnt wird, und
die Stofflöser (2, 5) direkt miteinander durch die Übertragungsleitung (4) auf der Grundlage des Prinzips von in Verbindung stehenden Gefässen derart verbunden sind, dass die Fasermassensuspension von dem Hochdichtestofflöser (2) zu dem Niedrigdichtestofflöser (5) lediglich durch die Wirkung des Druckes strömt, der durch den Unterschied in den Fluidhöhen des Hochdichtestofflösers (2) und des Niedrigdichtestofflösers (5) erzeugt wird.

11. Gerät gemäß Anspruch 10,
**dadurch gekennzeichnet, dass**
die Übertragungsleitung (4) einen Abfallschacht (6) zum Entfernen von Unreinheiten, die schwerer als die Fasermassensuspension sind, aus der Fasermassensuspension aufweist, wenn diese von dem Hochdichtestofflöser (2) zu dem Niedrigdichtestofflöser (5) strömt.

12. Gerät gemäß Anspruch 10 oder 11,
**dadurch gekennzeichnet, dass**
die Einrichtung zum Sieben der Fasermassensuspension ein Sieb (7) aufweist, das zu dem Niedrigdichtestofflöser (5) zugehörig ist, so dass zwischen dem Niedrigdichtestofflöser (5) und dem Sieb (7) eine Siebplatte (7a) vorhanden ist, durch die die Fasermassensuspension zu dem Sieb (7) strömt, um gesiebt zu werden.

13. Gerät gemäß Anspruch 12,
**dadurch gekennzeichnet, dass**
das Sieb (7) eine separate zylindrische Siebfläche (7b) aufweist, wobei das Material, das durch die Fläche getreten ist, für eine weitere Behandlung geleitet wird,
das Gerät eine Leitung (10) aufweist, damit das Material, das nicht durch die Siebfläche (7b) getreten ist, zu dem Hochdichtestofflöser (2) zurückkehrt, und
das Gerät einen separaten Abfallstofflöser (12) aufweist, wobei der Abfallstofflöser (12) mit dem Niedrigdichtestofflöser (5) so verbunden ist, dass das Material, das nicht durch die Siebplatte (7a) tritt, von dem Niedrigdichtestofflöser (5) zu dem Abfallstofflöser (12) tritt, um in diesem weiter behandelt zu werden.

14. Gerät gemäß Anspruch 13,
**dadurch gekennzeichnet, dass**
der Abfallstofflöser (12) eine Siebplatte (12a) aufweist, wobei das Material, das durch die Platte getreten ist, für eine weitere Behandlung geleitet wird, und
das Gerät eine Waschtrommel (15) aufweist, zu der das Material, das nicht durch die Siebplatte (12a) getreten ist, geleitet wird, um gewaschen zu werden.

15. Gerät gemäß Anspruch 14,
**dadurch gekennzeichnet, dass**
es eine Einrichtung für ein Wiedergewinnen des Wassers, das in der Waschtrommel (15) verwendet wird, und des mit dem Wasser vermischten Fasermaterials und für ein Liefern von einem Anteil des Wassers und der Faser zu dem Hochdichtestofflöser (2) aufweist.

16. Gerät gemäß Anspruch 15,
**dadurch gekennzeichnet, dass**
es eine Leitung (3') aufweist, um das von der Waschstufe wiedergewonnene Wasser und das mit dem Wasser vermischte Fasermaterial zu der Übertragungsleitung zu leiten, die sich zwischen dem Hochdichtestofflöser (2) und dem Niedrigdichtestofflöser (5) befindet, um die Fasermassensuspension für den Niedrigdichtestofflöser in der Übertragungsleitung zu verdünnen.

## Revendications

1. Procédé de défibrage et de tamisage de matériau en fibre recyclé, dans lequel le matériau en fibre recyclé est défibré à l'eau, les impuretés sont retirées de celui-ci et la masse fibreuse obtenue est tamisée, de telle sorte que le matériau en fibre recyclé devant être défibré est introduit avec de l'eau dans un désintégrateur primaire, qui est un désintégrateur à compacité élevée, dans lequel il est d'abord défibré à une compacité élevée, la masse fibreuse en suspension formée dans le désintégrateur à compacité élevée est délivrée à partir de ce dernier, sans tamisage, par l'intermédiaire d'un conduit de transfert qui s'étend depuis la partie inférieure du désintégrateur à compacité élevée jusqu'à un désintégrateur secondaire, dans lequel le matériau en fibre recyclé est encore défibré et la masse fibreuse en suspension est seulement tamisée après avoir été défibrée dans le désintégrateur secondaire, **caractérisé en ce qu'**à la fois le désintégrateur primaire et le désintégrateur secondaire sont des désintégrateurs verticaux, **en ce que** le désintégrateur secondaire est un désintégrateur à faible compacité (5), dans lequel la masse fibreuse en suspension formée dans le désintégrateur à compacité élevée (2) diluée avec de l'eau est délivrée selon le principe des vases communicants, uniquement par l'action de la pression résultant de la différence entre les niveaux hydrostatiques du désintégrateur à compacité élevée (2) et du désintégrateur à faible compacité (5).

2. Procédé selon la revendication 1, **caractérisé en ce que** la masse fibreuse qui s'écoule du désintégrateur à compacité élevée (2) vers le désintégrateur à faible compacité (5) est diluée en délivrant de l'eau de dilution dans la masse fibreuse en suspension à l'extrémité du conduit de transfert (4) placé entre les désintégrateurs (2, 5) du côté du désintégrateur à compacité élevée (2).

3. Procédé selon la revendication 2, **caractérisé en ce que** des impuretés lourdes sont séparées de la masse fibreuse s'écoulant du désintégrateur à compacité élevée (2) vers le désintégrateur à faible compacité (5) au moyen d'une goulotte de déchets (6) placée dans le conduit de transfert (4).

4. Procédé selon l'une quelconque des revendications précédentes, **caractérisé en ce que** la masse fibreuse en suspension est tamisée au moyen d'un tamis (7) associé au désintégrateur à faible compacité (5), après quoi la masse fibreuse en suspension qui est passée à travers la plaque de tamis (7a) placée entre le tamis (7) et le désintégrateur à faible compacité (5) est encore tamisée au moyen d'une surface de tamisage cylindrique (7b) placée dans le tamis (7), de telle sorte que la masse fibreuse en suspension qui est passée à travers la surface de tamisage (7b) est délivrée en vue d'un autre traitement et la partie de la masse fibreuse en suspension qui n'est pas passée à travers la surface est renvoyée vers le désintégrateur à compacité élevée (2), et **en ce que** les rejets qui ne passent pas à travers la plaque de tamis (7a) sont conduits vers un désintégrateur de rejets (12) séparé en vue d'un autre traitement.

5. Procédé selon la revendication 4, **caractérisé en ce que** le matériau qui est passé à travers une plaque de tamis (12a) placée sur le désintégrateur de rejets est délivré en vue d'un autre traitement et les rejets qui ne sont pas passés à travers la plaque sont introduit dans un tambour de lavage (15) séparé de manière à être lavés.

6. Procédé selon la revendication 5, **caractérisé en ce que** l'eau utilisée pour le lavage et le matériau en fibre séparé des rejets et mélangé à l'eau sont récupérés et une partie de ceux-ci est délivrée dans le désintégrateur à compacité élevée (2).

7. Procédé selon la revendication 6, **caractérisé en ce qu'**une partie de ladite eau récupérée est délivrée dans le conduit de transfert (4) entre les désintégrateurs (2, 5) en tant qu'eau de dilution pour la masse fibreuse en suspension.

8. Procédé selon la revendication 6 ou 7, **caractérisé en ce que** toute l'eau supplémentaire remplaçant l'eau qui est évacuée avec la masse fibreuse en suspension délivrée en vue d'un autre traitement, est introduite dans l'étage de défibrage sous la forme d'eau de lavage du tambour de lavage.

9. Procédé selon l'une quelconque des revendications précédentes, **caractérisé en ce que** la masse fibreuse est désintégrée dans le désintégrateur à compacité élevée de telle sorte que la compacité soit comprise entre 10 et 18 %, et **en ce qu'**elle est diluée de telle sorte que la compacité dans le désintégrateur à faible compacité soit comprise entre 2 et 8 %.

10. Dispositif de défibrage et de tamisage de matériau en fibre recyclé, le dispositif comprenant un moyen destiné. à défibrer le matériau en fibre et un tamis destiné à tamiser la masse fibreuse en suspension obtenue, de telle sorte que le moyen de défibrage du matériau en fibre recyclé comprend deux désintégrateurs, le premier étant un désintégrateur à compacité élevée dans lequel le matériau en fibre recyclé et l'eau sont délivrés et les désintégrateurs sont interconnectés avec un conduit de transfert qui s'étend de la partie inférieure du désintégrateur de compacité élevée au second désintégrateur, **caractérisé en ce que** les deux désintégrateurs (2, 5) sont des désintégrateurs verticaux, **en ce que** le second désintégrateur (5) est un désintégrateur à faible compacité dans lequel la masse fibreuse en suspension formée dans le désintégrateur à compacité élevée est délivrée afin de subir un défibrage complémentaire, dilué dans de l'eau, et les désintégrateurs (2, 5) sont directement interconnectés avec le conduit de transfert (4) selon le principe des vases communicants, de telle sorte que la masse fibreuse en suspension s'écoule du désintégrateur à compacité élevée (2) vers le désintégrateur à faible compacité (5) uniquement sous l'action de la pression produite par la différence entre les niveaux hydrostatiques du désintégrateur à compacité élevée (2) et du désintégrateur à faible compacité (5).

11. Dispositif selon la revendication 10, **caractérisé en ce que** le conduit de transfert (4) comprend une goulotte de déchets (6) destinée à éliminer les impuretés qui sont plus lourdes que la masse fibreuse en suspension, de la masse fibreuse en suspension lorsqu'elle s'écoule du désintégrateur à compacité élevée (2) vers le désintégrateur à faible compacité (5).

12. Dispositif selon la revendication 10 ou 11, **caractérisé en ce que** le moyen de tamisage de la masse fibreuse en suspension comprend un tamis (7) qui est associé au désintégrateur à faible compacité (5) de telle sorte qu'entre le désintégrateur à faible compacité (5) et le tamis (7) se trouve une plaque de tamis (7a) à travers laquelle la masse fibreuse en suspension s'écoule vers le tamis (7) pour le tamisage.

13. Dispositif selon la revendication 12, **caractérisé en ce que** le tamis (7) comprend une surface de tamisage cylindrique séparée (7b), le matériau qui est passé à travers la surface étant transféré en vue d'un autre traitement, **en ce que** le dispositif comprend un conduit (10) destiné à renvoyer le matériau qui n'est pas passé à travers la surface de tamisage (7b) vers le désintégrateur à compacité élevée (2), et **en ce que** le dispositif comprend un désintégrateur de rejets séparé (12), **en ce que** le désintégrateur de rejets (12) est raccordé au désintégrateur à faible compacité (5) de telle sorte que le matériau qui ne passe pas à travers la plaque de tamis (7a), s'écoule du désintégrateur à faible compacité (5) vers le désintégrateur de rejets (12) afin de subir un traitement complémentaire dans celui-ci.

14. Dispositif selon la revendication 13, **caractérisé en ce que** le désintégrateur de rejets (12) comprend une plaque de tamis (12a), le matériau qui est passé à travers la plaque étant transféré en vue d'un autre traitement, et **en ce que** le dispositif comprend un tambour de lavage (15) vers lequel le matériau qui n'est pas passé à travers la plaque de tamis (12a) est conduit pour le lavage.

15. Dispositif selon la revendication 14, **caractérisé en ce qu'**il comprend un moyen destiné à récupérer l'eau utilisée dans le tambour de lavage (15) et le matériau en fibre mélangé à l'eau, et à délivrer une partie de l'eau et des fibres au désintégrateur à compacité élevée (2).

16. Dispositif selon la revendication 15, **caractérisé en ce qu'**il comprend un conduit (3') destiné à acheminé l'eau récupérée de l'étage de lavage et le matériau en fibre mélangé à l'eau dans le conduit de transfert situé entre le désintégrateur à compacité élevée (2) et le désintégrateur à faible compacité (5) dans le but de diluer la masse fibreuse en suspension pour le désintégrateur à faible compacité dans le conduit de transfert.
